# FASCICULE DE BREVET EUROPEEN

(11) **EP 2 918 942 B1**
(45) Date de publication et mention de la délivrance du brevet: **26.07.2017**
(21) Numéro de dépôt: 15158961.1
(22) Date de dépôt: 13.03.2015
(51) Int. Cl.: F24H 1/20, F24H 9/12, F24D 11/00, F24D 19/10

(54) **Système de chauffage à tube immergé compact à deux sources de chaleur**
Heizsystem mit kompaktem Tauchrohr mit zwei Heizquellen
Heating system with compact submerged pipe and two heat sources

(30) Priorité: 13.03.2014 FR 1452113
(43) Date de publication de la demande: 16.09.2015
(73) Titulaire: PLDF, 22400 Lamballe (FR)
(72) Inventeur: Madec, Yannick, 22400 Saint Denoual (FR)
(74) Mandataire: Novagraaf Technologies

(56) Documents cités:
- EP-A1- 2 354 680
- DE-U1- 29 914 113
- US-A- 4 545 329

## Description

### Domaine technique

La présente invention se rapporte au domaine des systèmes de chauffage industriels à tube immergé compact pour la production de liquides chauds en bains, en cuves ou en ballons.

### Etat de la technique

L'utilisation de tube immergé compact, classiquement appelé TIC, est bien connu dans le domaine de la production d'eau chaude ou de liquides chauds dans le milieu industriel.

On connait notamment les systèmes de chauffage comportant:
- une cuve pour recevoir le liquide à chauffer, ladite cuve comportant une portion supérieure, une portion inférieure et une portion intermédiaire entre lesdites portions inférieure et supérieure, le liquide à chauffer étant présents dans lesdites portions supérieure, inférieure et intermédiaire en communication fluidique,
- une source de chaleur à tube immergé compact pour réchauffer le liquide dans ladite cuve, ladite source de chaleur primaire étant disposée dans la portion supérieure de la cuve,
- une boucle de liquide en circuit fermé connectée entre une première sortie de liquide et une première entrée de liquide de la cuve et dans laquelle circule du liquide de la cuve, ladite première sortie de liquide étant agencée pour prélever du liquide dans la portion supérieure de la cuve et ladite première entrée de liquide étant agencée pour ramener du liquide dans la portion inférieure de la cuve.

La source à tube immergé compact réchauffe le liquide présent dans la cuve et l'amène à une température de consigne qui est par exemple comprise entre 60°C et 70°C. La source à TIC étant disposée entièrement dans la portion supérieure de la cuve, elle réchauffe le liquide présent dans cette portion et le liquide circulant dans la boucle de liquide est prélevé dans cette portion. Seul le liquide présent dans cette portion supérieure est à la température de consigne, le reste du liquide présent dans la cuve étant généralement à une température inférieure à la température de consigne. Le liquide présent dans la cuve se présente sous forme de strates, chaque strate correspondant à une température ou un intervalle de température, les strates les plus chaudes étant disposées dans la portion supérieure de la cuve et les strates les plus froides dans la portion inférieure.

Ce système étant habituellement installé dans un environnement (usines ou entrepôts) disposant de nombreuses sources de chaleur, telle que la chaleur produite par des groupes de froid, on pourrait envisager de récupérer de la chaleur de ces sources annexes pour améliorer le rendement du système à tube immergé compact.

Le document DE 299 14 113 U1 décrit un système de chauffage selon le préambule de la revendication 1, destiné à chauffer une pluralité d' équipements, qui comprend une autre source de chaleur. Dans un système combinant une source de chaleur à TIC avec une autre source de chaleur le fonctionnement de la source de chaleur à TIC peut être perturbé.

### Résumé de l'invention

Un objet de l'invention est de proposer un système de chauffage de liquide dans une cuve comprenant une source de chaleur à TIC et une source de chaleur fluctuante.

L'invention concerne plus particulièrement un système de chauffage d'un liquide tel que défini à la revendication 1, comprenant :
- une cuve pour recevoir le liquide à chauffer, ladite cuve comportant une portion supérieure, une portion inférieure et une portion intermédiaire entre lesdites portions inférieure et supérieure, le liquide à chauffer étant présents dans lesdites portions supérieure, inférieure et intermédiaire en communication fluidique,
- une source de production de chaleur à tube immergé compact pour réchauffer le liquide dans ladite cuve, ledit tube immergé compact étant entièrement disposé dans la portion supérieure de la cuve,
- une première boucle de liquide en circuit fermé connectée entre une première sortie de liquide et une première entrée de liquide de la cuve et dans laquelle circule du liquide de la cuve, ladite première sortie de liquide étant agencée pour prélever du liquide dans la portion supérieure de la cuve et ladite première entrée de liquide étant agencée pour ramener du liquide dans ladite portion inférieure ou ladite portion intermédiaire de la cuve,
remarquable en ce qu'il comporte en outre
- une source de récupération chaleur disposée à l'extérieur de la cuve et apte à récupérer de la chaleur dans l'environnement de la cuve et à réchauffer du liquide circulant dans une deuxième boucle de liquide en circuit fermé connectée entre une deuxième sortie de liquide de la cuve et des deuxième et troisième entrées de liquide de la cuve, la chaleur récupérée par ladite source de chaleur étant fluctuante, ladite deuxième sortie de liquide étant agencée pour prélever du liquide dans la portion inférieure de la cuve et lesdites deuxième et troisième entrées de liquide de la cuve étant agencées pour ramener du liquide à des premier et deuxième niveaux d'élévation dans la cuve respectivement, ledit premier niveau d'élévation étant situé dans la portion inférieure ou la portion intermédiaire de la cuve et ledit deuxième niveau d'élévation étant situé dans la portion supérieure ou la portion intermédiaire de la cuve, ledit deuxième niveau d'élévation étant situé au-dessus du premier niveau d'élévation,
- une première électrovanne montée sur ladite deuxième boucle de liquide pour mettre en communication fluidique ladite deuxième sortie de liquide avec ladite deuxième entrée de liquide et une deuxième électrovanne montée sur ladite deuxième boucle de liquide pour mettre en communication fluidique ladite deuxième sortie de liquide avec ladite troisième entrée de liquide, et
- un circuit de commande pour piloter lesdites première et deuxième électrovannes en fonction de la chaleur récupérée par ladite deuxième source de chaleur.

Ainsi, selon l'invention, le système de chauffage à tube immergé compact est combiné avec une source de récupération de chaleur externe apte à chauffer le liquide de la cuve, via une boucle de liquide (deuxième boucle de liquide) dans laquelle circule du liquide prélevé dans la portion inférieure de la cuve. Le liquide circulant dans la deuxième boucle de liquide est réintroduit dans la cuve auxdits premier et deuxième niveaux d'élévation en fonction de la chaleur récupérée par la source de récupération de chaleur.

La chaleur récupérée par ladite source de récupération de chaleur est fluctuante. Il peut s'agit d'une pompe à chaleur récupérant de la chaleur produite par des machines présentes sur le site où est installé le système de chauffage de l'invention.

Selon un mode de réalisation particulier, la deuxième source de chaleur est une pompe à chaleur apte à récupérer de la chaleur dans l'environnement du système de chauffage. La pompe à chaleur récupère par exemple de la chaleur produite par un groupe de froid disposé à proximité du système de chauffage de l'invention.

Selon un autre mode de réalisation particulier, la deuxième source de chaleur est un panneau solaire.

Selon un mode de réalisation particulier, le circuit de commande pilote en outre la source de production de chaleur et la source de récupération de chaleur, ladite source de production de chaleur produisant de la chaleur lorsque la température du liquide dans ladite portion supérieure de la cuve est inférieure à une première température de consigne et ladite source de récupération de chaleur récupérant de la chaleur lorsque la température du liquide dans ladite portion supérieure de la cuve est inférieure à une deuxième température de consigne, laquelle deuxième température de consigne est supérieure à ladite première température de consigne.

Ainsi, selon l'invention, la source de récupération de chaleur fonctionne prioritairement par rapport à la source de production de chaleur. La source de production de chaleur à tube immergé compact n'est en marche que si la température du liquide dans ladite portion supérieure de la cuve n'atteint pas la première température de consigne, c'est-à-dire la température de consigne la plus haute.

Selon un exemple de réalisation, la première température de consigne est égale à 68°C et la deuxième température de consigne est égale à 65°C. Cela signifie que, lorsque la température du liquide dans ladite portion supérieure de la cuve est inférieure à 65°C, les deux sources de chaleur sont en fonctionnement. Lorsque ladite température est comprise entre 65°C et 68°C, seule la source de récupération de chaleur fonctionne. Au-delà de 68°C, les deux sources de chaleur sont à l'arrêt.

Selon un mode de réalisation particulier, le circuit de commande pilote lesdites première et deuxième électrovannes en fonction de la température du liquide à la sortie de ladite source de récupération de chaleur, appelée température de sortie.

Selon un mode de réalisation particulier, le circuit de commande ouvre ladite première électrovanne et ferme ladite deuxième électrovanne si ladite température de sortie est inférieure à une température seuil et en ce qu'il ferme ladite première électrovanne et ouvre ladite deuxième électrovanne sinon.

Selon un mode de réalisation particulier, la troisième entrée de liquide est située dans ladite portion supérieure ou à proximité de ladite première source de chaleur dans ladite portion intermédiaire et en ce que ladite température de seuil est sensiblement égale à la deuxième température de consigne.

Selon un mode de réalisation particulier, la deuxième entrée de liquide est située dans ladite portion intermédiaire de la cuve.

Selon un mode de réalisation particulier, la cuve comporte en outre au moins une quatrième entrée de liquide située au-dessus de ladite première entrée de liquide, ladite première boucle liquide étant connectée entre ladite première sortie de liquide et lesdites première et au moins quatrième entrées de liquide de la cuve, et le système comporte en outre une troisième électrovanne montée sur ladite première boucle de liquide pour mettre en communication fluidique ladite première sortie de liquide avec ladite première entrée de liquide et au moins une quatrième électrovanne montée sur ladite première boucle de liquide pour mettre en communication fluidique ladite première sortie de liquide avec ladite au moins une quatrième entrée de liquide, ledit circuit de commande pilotant ladite troisième électrovanne et ladite au moins une quatrième électrovanne en fonction de la température du liquide après passage dans ladite première boucle de liquide et de la température du liquide à l'intérieur de la cuve au niveau desdites première et au moins une quatrième entrées de liquide.

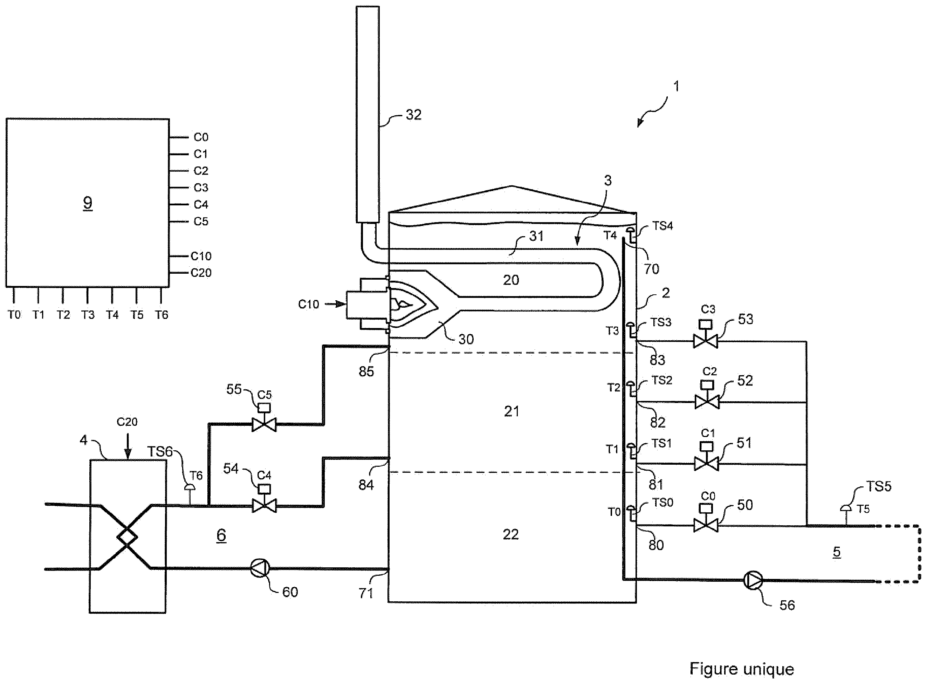

D'autres avantages pourront encore apparaître à l'homme du métier à la lecture des exemples ci-dessous, illustrés par la figure annexée donnée à titre illustratif.

### Description détaillée de l'invention

En référence à la figure unique, le système de chauffage de l'invention référencé 1 dans son ensemble comporte une cuve 2 pour recevoir le liquide à chauffer et deux sources de chaleur 3 et 4 pour chauffer le liquide présent dans la cuve. La cuve 2 est subdivisée verticalement entre trois portions, à savoir une portion supérieure 20, une portion inférieure 22 et une portion intermédiaire 21 entre lesdites portions inférieure et supérieure. Les portions 20, 21 et 22 ne sont pas séparées par des cloisons de sorte que le liquide présent dans la cuve se présente sous forme de strates, chaque strate correspondant à une température ou un intervalle de température, les strates les plus chaudes étant disposées dans la portion supérieure de la cuve et les strates les plus froides dans la portion inférieure.

La source de chaleur 3 est une source de production de chaleur à tube immergé compact dont le tube immergé compact est disposé dans la portion supérieure 20 de la cuve et la source de chaleur 4 est une source de récupération de chaleur disposée à l'extérieur de la cuve 2. La source de chaleur 4 est destinée à récupérer de la chaleur dans l'environnement de la cuve 2. A ce titre, elle génère une chaleur qui est fluctuante en température.

La structure d'une source de production de chaleur à tube immergé telle que la source de chaleur 3 est bien connue de l'homme du métier. Sommairement, la source de chaleur 3 comprend un brûleur 30 alimenté en air comburant et en gaz combustible pour produire des gaz de combustion chauds et un tube échangeur de chaleur 31 placé à l'intérieur de la cuve 2 dans lequel circulent les gaz de combustion chauds produits par le brûleur. Les gaz de combustion sont évacués du tube échangeur de chaleur par une cheminée 32 débouchant à l'extérieur du bâtiment accueillant le système de chauffage de l'invention. Le mélange air/gaz alimentant la chambre de combustion est en surpression pour compenser les pertes de charge.

La cuve 2 alimente en liquide chauffé une première boucle de liquide en circuit fermé, référencée 5, le liquide chauffé circulant dans cette boucle servant à chauffer ou à apporter de la chaleur à des installations annexes. La boucle de liquide 5 est connectée entre une sortie de liquide 70 de la cuve et au moins une entrée de liquide 80 de la cuve située dans la portion inférieure 22 de la cuve. Dans le mode de réalisation illustré, la boucle de liquide 5 est connectée entre la sortie de liquide 70 et quatre entrées de liquide, référencées 80, 81, 82 et 83. Un circulateur 56 assure la circulation du liquide dans la boucle de la sortie de liquide 70 vers l'une quelconque des entrées de liquide 80 à 83.

Chaque entrée de liquide 80 à 83 est équipée d'une électrovanne, référencée respectivement 50, 51, 52 et 53, pour mettre sélectivement en communication fluidique la sortie de liquide 70 avec l'une des entrées de liquides 80 à 83. Les électrovannes 50, 51, 52 et 53 sont chacune commandées par un signal de commande, respectivement C0, C1, C2 et C3, délivré par un circuit de commande 9.

Les entrées de liquide 80 à 83 sont étagées verticalement de manière à réintroduire le liquide de la boucle de liquide 5 à différents niveaux d'élévation dans la cuve 2. L'entrée la plus basse, à savoir l'entrée de liquide 80, est disposée dans la portion inférieure 22 de la cuve et l'entrée la plus haute, à savoir l'entrée de liquide 83, est disposée dans la portion supérieure 20 de la cuve, les deux autres entrées de liquide 81 et 82 étant disposées dans la portion intermédiaire 21 de la cuve. Les entrées 80 à 83 sont éventuellement régulièrement espacées selon un axe vertical.

Par ailleurs, une sonde de température est disposée à l'intérieur de la cuve 2 et à proximité de chaque entrée de liquide 80 à 83 pour mesurer la température du liquide dans la cuve au niveau de ces entrées. TS0, TS1, TS2 et TS3 désignent respectivement les sondes de température à proximité des entrées de liquide 80, 81, 82 et 83 et délivrent respectivement une température T0, T1, T2 et T3.

Une sonde de température TS4 est également disposée à l'intérieur de la cuve à proximité de la sortie de liquide 70 pour mesurer la température T4 du liquide au niveau de cette sortie. Une autre sonde de température TS5 est prévue sur la boucle de liquide 5, avant la dérivation vers les quatre entrées de liquide 80 à 83, pour mesurer la température T5 de retour du liquide ayant circulé à travers la boucle de liquide 5.

Toutes ces températures T0 à T5 sont fournies au circuit de commande 9.

La source de chaleur 4 est destinée à récupérer de la chaleur dans l'environnement du système de chauffage. Dans le mode de réalisation illustré, cette source de chaleur 4 est une pompe à chaleur eau-eau chargé de récupérer la chaleur présente dans l'environnement du système de chauffage et de la transmettre à une boucle de liquide 6 en circuit fermé. La chaleur présente dans l'environnement du système de chauffage est par exemple la chaleur produite par un groupe de froid ou une autre machine présent(e) à proximité de la pompe à chaleur.

La boucle de liquide 6 est connectée entre une sortie de liquide 71 de la cuve et deux entrées de liquide 84 et 85 de la cuve. La sortie de liquide 71 prélève du liquide dans la portion inférieure 22 de la cuve et les entrées de liquide 84 et 85 réintroduisent du liquide respectivement dans la portion intermédiaire 21 et la portion supérieure 20 de la cuve. Dans le mode de réalisation illustré, l'entrée de liquide 84 est à mi hauteur entre la sortie de liquide 71 et l'entrée de liquide 85. Un circulateur 60 fait circuler le liquide de la sortie de liquide 71 vers l'une des entrées de liquide 84 et 85. Cette boucle de liquide 6 échange de la chaleur avec une autre boucle à l'intérieur de la pompe à chaleur 4. Le liquide provenant de la sortie de liquide 71 est réchauffé dans la pompe à chaleur puis fourni sélectivement à l'une des entrées de liquide 84 et 85.

A cet effet, chaque entrée de liquide 84, 85 est équipée d'une électrovanne, référencée respectivement 54 et 55, pour mettre sélectivement en communication fluidique la sortie de liquide 71 avec l'une des entrées de liquides 84 et 85. Les électrovannes 54 et 55 sont chacune commandées par un signal de commande, respectivement C4 et C5, délivré par le circuit de commande 9.

Une sonde de température TS6 est disposée au niveau de la boucle 6, après passage du liquide dans la pompe à chaleur, pour mesurer la température T6 du liquide réchauffé par la pompe à chaleur. Cette température est fournie au circuit de commande 9.

Le circuit de commande 9 reçoit ainsi les températures T0 à T3 du liquide au niveau des entrées de liquide 80 à 83, la température T4 du liquide au niveau de la sortie de liquide 70, la température T5 de retour de la boucle de liquide 5 et la température T6 du liquide réchauffé par la pompe à chaleur 4 et il va commander l'ouverture ou la fermeture des électrovannes 60 à 55, via les signaux de commande C0 à C5, et la mise en marche de la source de chaleur 3 et de la pompe à chaleur 4, via des signaux de commande C10 et C20, en fonction de ces températures.

Plus particulièrement, le circuit de commande 9 pilote la source de chaleur 3 et la pompe à chaleur 4 pour que la température T4 à la sortie 70 soit sensiblement égale à une température prédéterminée, par exemple égale à une température comprise entre 65°C et 68°C. Pour cela, on fixe une température de consigne pour chacune des sources de chaleur, par exemple TC1 pour la source de chaleur 3 et TC2 pour la pompe à chaleur.

Ces deux températures TC1 et TC2 peuvent être égales.

Dans un exemple de fonctionnement, la température de consigne TC1 est fixée à 68°C et la température de consigne TC2 est fixée à 65°C. Cela signifie que, lorsque la température T4 du liquide dans la portion supérieure 20 de la cuve est inférieure à 65°C, les deux sources de chaleur 3 et 4 sont en fonctionnement et, lorsque la température T5 est comprise entre 65°C et 68°C, seule la pompe à chaleur 4 fonctionne. Au-delà de 68°C, les deux sources de chaleur 3 et 4 sont à l'arrêt.

Selon ce mode de fonctionnement, la pompe à chaleur 4 fonctionne prioritairement par rapport à la source de de chaleur 3. La source de production de chaleur à tube immergé compact n'est en marche que si la température du liquide dans ladite portion supérieure de la cuve n'atteint pas la température de consigne TC1, c'est-à-dire la température de consigne la plus haute.

Par ailleurs, le liquide de la boucle de liquide 5 est réintroduit dans la cuve par les entrées de liquide 80 à 83 en fonction de sa température de retour et des températures T1 à T4 à l'intérieur de la cuve. Le circuit de commande 9 pilote l'ouverture de l'électrovanne associée à l'entrée de liquide dont la température qui est mesurée à proximité est la plus proche (cas 1) ou immédiatement inférieure (cas 2) ou immédiatement supérieure (cas 3).

Par exemple, si la température de retour T4 est égale à 58°C et que T3=65°C, T2=61°C, T1=57°C et T0=52°C, le circuit de commande 9 pilote l'ouverture de l'électrovanne 51 associée à l'entrée de liquide 81 dans les cas 1 et 2 et l'ouverture de l'électrovanne 52 associée à l'entrée de liquide 82 dans le cas 2. Les autres électrovannes associées aux entrées 80 à 83 sont fermées et donc ne laissent pas passer de liquide. On réintroduit le liquide dans la cuve à un niveau d'élévation perturbant le moins possible la stratification de température présente dans la cuve et, par voie de conséquence, perturbant le moins possible le fonctionnement de la source de chaleur 3.

De même, selon l'invention, le liquide provenant de la boucle de liquide 6 est réintroduit dans la cuve par les entrées de liquide 84 et 85 en fonction de la température T6 à la sortie de la pompe à chaleur et d'une température de seuil prédéterminée Tseuil. La température Tseuil est éventuellement égale à TC1 ou TC2 selon la position des entrées de liquide 84 et 85 sur la cuve. Dans le mode de réalisation illustré, l'entrée de liquide 85 étant positionné dans la portion supérieure 20, la température Tseuil est de préférence égale à TC1 ou TC2.

Selon l'invention, le circuit de commande 9 pilote l'ouverture de l'électrovanne 54 ou 55 en fonction de la température T6 par rapport à la température Tseuil. Si la température T6 est supérieure ou égale à Tseuil, le circuit de commande ouvre l'électrovanne 55 et ferme l'électrovanne 54. Si la température T6 est inférieure à Tseuil, le circuit de commande ouvre l'électrovanne 54 et ferme l'électrovanne 55.

Par exemple, si la température de retour T6 est égale à 58°C et que Tseuil=TC2=65°C, le circuit de commande 9 pilote l'ouverture de l'électrovanne 55 associée à l'entrée de liquide 85. Ainsi, on réintroduit dans la cuve le liquide provenant de la boucle 6 à un niveau d'élévation perturbant le moins possible la stratification de température présente dans la cuve et, par voie de conséquence, perturbant le moins possible le fonctionnement de la source de chaleur 3.

L'étagement des entrées de liquide en communication fluidique avec la boucle de liquide 5 et la boucle de liquide 6 et le commande des électrovannes 80 à 85 en fonction des températures T0 à T6 permet de perturber le moins possible la stratification en température à l'intérieur de la cuve et, de ce fait, de perturber le moins possible le fonctionnement de la source de chaleur à TIC et de maximiser la récupération de chaleur.

Le mode de réalisation décrit ci-dessus a été donné à titre d'exemple. Il est évident pour l'homme de l'art qu'il peut être modifié. En effet, la source de chaleur 4 est une source de récupération de chaleur pour récupérer de la chaleur dans l'environnement du système de chauffage. Cette source peut donc être un panneau solaire. De même, le nombre d'entrées de liquide en communication avec les boucles de liquide 5 et 6 peut être modifié. On pourrait notamment augmenter le nombre d'entrées de liquide en communication avec la boucle de liquide 6 et le passer de 2 à 3 ou 4.

Selon une variante, les électrovannes 50 à 53 et les multiples entrées de liquides 80 à 83 de la boucle de liquide 5 sont supprimées et sont remplacées par une seule entrée de liquide débouchant sur un premier tube disposé dans la cuve, ledit premier tube comportant un coude à 90° suivi d'une portion de tube verticale fermée à son extrémité supérieure. Cette portion verticale comporte une pluralité de lumières réparties sur sa hauteur. Un deuxième tube disposé concentriquement à cette portion de tube coulisse verticalement le long de celle-ci. Ce deuxième tube comporte également une pluralité de lumières. Les pluralités de lumières de ces deux tuyaux sont définies pour que, à chaque position de coulissement du deuxième tube par rapport au premier tube, au plus une lumière du premier tube coïncide avec une lumière du deuxième tube. Ainsi, le liquide de la boucle de liquide 5 est ramené dans la cuve au niveau d'élévation correspondant à ces deux lumières qui coïncident. Il est ainsi possible d'augmenter le nombre de niveaux d'élévation auxquels le liquide est ramené dans la cuve en augmentant le nombre de lumières sur les deux tubes. Cette variante permet également d'augmenter le nombre de strates en augmentant proportionnellement le nombre de lumières.

On pourrait également envisager de commander différemment les électrovannes 54 et 55 en rajoutant des sondes de température au niveau des entrées de liquide 84 et 85 et en ouvrant l'électrovanne associée à l'entrée de liquide dont la température est la plus proche de la température T6.

Par ailleurs, les températures de consigne TC1 et TC2 peuvent être égales et la température Tseuil peut être inférieure à TC1.

On peut également envisager un système avec plusieurs boucles de récupération de chaleur.

## Revendications

1. Système de chauffage (1) d'un liquide comprenant:
- une cuve (2) pour recevoir le liquide à chauffer, ladite cuve comportant une portion supérieure (20), une portion inférieure (22) et une portion intermédiaire (21) entre lesdites portions inférieure et supérieure, le liquide à chauffer étant présents dans lesdites portions supérieure, inférieure et intermédiaire en communication fluidique,
- une source de production de chaleur (3) à tube immergé compact pour réchauffer le liquide dans ladite cuve,
- une première boucle de liquide (5) en circuit fermé connectée entre une première sortie de liquide (70) et une première entrée de liquide (80) de la cuve et dans laquelle circule du liquide de la cuve, ladite première sortie de liquide (70) étant agencée pour prélever du liquide dans la portion supérieure (20) de la cuve et ladite première entrée de liquide (80) étant agencée pour ramener du liquide dans ladite portion inférieure (22) ou ladite portion intermédiaire (21) de la cuve,
- une source de récupération chaleur (4) disposée à l'extérieur de la cuve et apte à récupérer de la chaleur dans l'environnement de la cuve et à réchauffer du liquide de la cuve circulant dans une deuxième boucle de liquide (6) en circuit fermé connectée entre une deuxième sortie de liquide (71) de la cuve et des deuxième et troisième entrées de liquide (84,85) de la cuve, ladite deuxième sortie de liquide (71) étant agencée pour prélever du liquide dans la portion inférieure (22) de la cuve et lesdites deuxième et troisième entrées de liquide (84,85) de la cuve étant agencées pour ramener du liquide à des premier et deuxième niveaux d'élévation dans la cuve respectivement, ledit premier niveau d'élévation étant situé dans la portion inférieure (22) ou la portion intermédiaire (21) de la cuve et ledit deuxième niveau d'élévation étant situé dans la portion supérieure (20) ou la portion intermédiaire (21) de la cuve, ledit deuxième niveau d'élévation étant situé au-dessus du premier niveau d'élévation,
- une première électrovanne (54) montée sur ladite deuxième boucle de liquide (6) pour mettre en communication fluidique ladite deuxième sortie de liquide (71) avec ladite deuxième entrée de liquide (84) et une deuxième électrovanne (55) montée sur ladite deuxième boucle de liquide (6) pour mettre en communication fluidique ladite deuxième sortie de liquide (71) avec ladite troisième entrée de liquide (85), et
- un circuit de commande (9) pour piloter lesdites première et deuxième électrovannes (54,55) en fonction de la chaleur récupérée par ladite deuxième source de chaleur (4)
**caractérisé en ce que** ledit tube immergé compact (31) est entièrement disposé dans la portion supérieure de la cuve.

2. Système selon la revendication 1, **caractérisé en ce que** la deuxième source de chaleur (4) est une pompe à chaleur apte à récupérer de la chaleur dans l'environnement du système de chauffage.

3. Système selon la revendication 1, **caractérisé en ce que** la deuxième source de chaleur (4) est un panneau solaire.

4. Système selon l'une quelconque des revendications précédentes, **caractérisé en ce que** le circuit de commande (9) pilote en outre la source de production de chaleur (3) et la source de récupération de chaleur (4), ladite source de production de chaleur (3) produisant de la chaleur lorsque la température du liquide (T4) dans ladite portion supérieure (20) de la cuve est inférieure à une première température de consigne (TC1) et ladite source de récupération de chaleur (3) récupérant de la chaleur lorsque la température du liquide dans ladite portion supérieure (20) de la cuve est inférieure à une deuxième température de consigne (TC2), laquelle deuxième température de consigne (TC2) est supérieure à ladite première température de consigne (TC1).

5. Système selon l'une quelconque des revendications précédentes, **caractérisé en ce que** le circuit de commande (9) pilote lesdites première et deuxième électrovannes (54,55) en fonction de la température du liquide (T6) à la sortie de ladite source de récupération de chaleur (4), appelée température de sortie.

6. Système selon la revendication 5, **caractérisé en ce que** le circuit de commande (9) ouvre ladite première électrovanne (54) et ferme ladite deuxième électrovanne (55) si ladite température de sortie (T6) est inférieure à une température seuil (Tseuil) et **en ce qu'**il ferme ladite première électrovanne (54) et ouvre ladite deuxième électrovanne (55) sinon.

7. Système selon la revendication 6, **caractérisé en ce que** ladite troisième entrée de liquide (85) est située dans ladite portion supérieure (20) ou à proximité de ladite première source de chaleur dans ladite portion intermédiaire (21) et **en ce que** ladite température de seuil (Tseuil) est sensiblement égale à la deuxième température de consigne (TC2).

8. Système selon la revendication 7, **caractérisé en ce que** ladite deuxième entrée de liquide (84) est située dans ladite portion intermédiaire (21) de la cuve.

9. Système selon l'une quelconque des revendications précédentes, **caractérisé en ce que** la cuve (2) comporte en outre au moins une quatrième entrée de liquide (81,82,83) située au-dessus de ladite première entrée de liquide (80), ladite première boucle liquide (5) étant connectée entre ladite première sortie de liquide (70) et lesdites première et au moins quatrième entrées de liquide (81,82,83) de la cuve,
et **en ce qu'**il comporte en outre une troisième électrovanne (50) montée sur ladite première boucle de liquide (5) pour mettre en communication fluidique ladite première sortie de liquide (70) avec ladite première entrée de liquide (80) et au moins une quatrième électrovanne (51,52,53) montée sur ladite première boucle de liquide (5) pour mettre en communication fluidique ladite première sortie de liquide (70) avec ladite au moins une quatrième entrée de liquide (81,82,83), ledit circuit de commande (9) pilotant ladite troisième électrovanne (50) et ladite au moins une quatrième électrovanne (51,52,53) en fonction de la température (T5) du liquide après passage dans ladite première boucle de liquide et de la température du liquide (T0, T1, T2, T3) à l'intérieur de la cuve au niveau desdites première et au moins une quatrième entrées de liquide.

## Patentansprüche

1. Heizsystem (1) einer Flüssigkeit, umfassend:
- einen Tank (2) zur Aufnahme der zu heizenden Flüssigkeit, wobei der besagte Tank einen oberen Abschnitt (20), einen unteren Abschnitt (22) und einen Zwischenabschnitt (21) zwischen dem besagten oberen und unteren Abschnitt aufweist, wobei die zu heizende Flüssigkeit im oberen, unteren und im Zwischenabschnitt in einer fluiden Verbindung vorhanden ist,
- eine Wärmeerzeugungsquelle (3) mit kompaktem Tauchrohr zum Aufwärmen der Flüssigkeit im besagten Tank,
- einen ersten Flüssigkeitskreislauf (5) in einem geschlossenen Kreis, der zwischen einem ersten Flüssigkeitsausgang (70) und einem ersten Flüssigkeitseingang (80) des Tanks angeschlossen ist, und in dem Flüssigkeit aus dem Tank zirkuliert, wobei der besagte erste Flüssigkeitsausgang (70) angeordnet ist, um Flüssigkeit im oberen Abschnitt (20) des Tanks zu entnehmen, und der besagte erste Flüssigkeitseingang (80) angeordnet ist, um Flüssigkeit in den besagten unteren Abschnitt (22) oder den besagten Zwischenabschnitt (21) des Tanks zurückzuführen,
- eine Wärmerückgewinnungsquelle (4), die außerhalb des Tanks angeordnet ist und imstande ist, Wärme aus der Umgebung des Tanks zurückzugewinnen, und Flüssigkeit aus dem Tank aufzuwärmen, die in einem zweiten Flüssigkeitskreislauf (6) in einem geschlossenen Kreis zirkuliert, der zwischen einem zweiten Flüssigkeitsausgang (71) des Tanks und einem zweiten und dritten Flüssigkeitseingang (84, 85) des Tanks angeschlossen ist, wobei der besagte zweite Flüssigkeitsausgang (71) angeordnet ist, um Flüssigkeit im unteren Abschnitt (22) des Tanks zu entnehmen, und der besagte zweite und dritte Flüssigkeitseingang (84, 85) des Tanks angeordnet sind, um Flüssigkeit jeweils in das erste und zweite Höhenniveau des Tanks zurückzuführen, wobei sich das besagte erste Höhenniveau im unteren Abschnitt (22) oder im Zwischenabschnitt (21) des Tanks befindet und sich das besagte zweite Höhenniveau im oberen Abschnitt (20) oder dem Zwischenabschnitt (21) des Tanks befindet, wobei sich das besagte zweite Höhenniveau oberhalb des ersten Höhenniveaus befindet,
- ein erstes Magnetventil (54), das im besagten zweiten Flüssigkeitskreislauf (6) montiert ist, um den besagten zweiten Flüssigkeitsausgang (71) mit dem besagten zweiten Flüssigkeitseingang (84) in eine fluide Verbindung zu bringen, und ein zweites Magnetventil (55), das im besagten zweiten Flüssigkeitskreislauf (6) montiert ist, um den besagten zweiten Flüssigkeitsausgang (71) mit dem besagten dritten Flüssigkeitseingang (85) in eine fluide Verbindung zu bringen, und
- einen Steuerungskreis (9) zum Ansteuern des besagten ersten und zweiten Magnetventils (54, 55) in Abhängigkeit von der durch die besagte zweite Wärmequelle (4) zurückgewonnenen Wärme,
**dadurch gekennzeichnet, dass** das besagte kompakte Tauchrohr (31) vollkommen im oberen Abschnitt des Tanks angeordnet ist.

2. System nach Anspruch 1, **dadurch gekennzeichnet, dass** die zweite Wärmequelle (4) eine Wärmepumpe ist, die imstande ist, Wärme aus der Umgebung des Heizsystems zurückzugewinnen.

3. System nach Anspruch 1, **dadurch gekennzeichnet, dass** die zweite Wärmequelle (4) ein Solarpanel ist.

4. System nach einem der vorhergehenden Ansprüche, **dadurch gekennzeichnet, dass** der Steuerungskreis (9) darüber hinaus die Wärmeerzeugungsquelle (3) und die Wärmerückgewinnungsquelle (4) ansteuert, wobei die besagte Wärmeerzeugungsquelle (3) Wärme erzeugt, wenn die Temperatur der Flüssigkeit (T4) im besagten oberen Abschnitt (20) des Tanks niedriger ist, als eine erste Solltemperatur (TC1) und die besagte Wärmerückgewinnungsquelle (3), Wärme zurückgewinnt, wenn die Temperatur der Flüssigkeit im besagten oberen Abschnitt (20) des Tanks niedriger ist, als eine zweite Solltemperatur (TC2), wobei die zweite Solltemperatur (TC2) höher ist, als die besagte erste Solltemperatur (TC1).

5. System nach einem der vorhergehenden Ansprüche, **dadurch gekennzeichnet, dass** der Steuerungskreis (9) das besagte erste und zweite Magnetventil (54, 55) in Abhängigkeit von der Temperatur der Flüssigkeit (T6) am Ausgang der besagten Wärmerückgewinnungsquelle (4) ansteuert, die Ausgangstemperatur genannt wird.

6. System nach Anspruch 5, **dadurch gekennzeichnet, dass** der Steuerungskreis (9) das besagte erste Magnetventil (54) öffnet und das besagte zweite Magnetventil (55) schließt, wenn die besagte Ausgangstemperatur (T6) niedriger ist, als eine Grenztemperatur (Tseuil) und dadurch, dass er ansonsten das besagte erste Magnetventil (54) schließt und das besagte zweite Magnetventil (55) öffnet.

7. System nach Anspruch 6, **dadurch gekennzeichnet, dass** sich der besagte dritte Flüssigkeitseingang (85) im besagten oberen Abschnitt (20) oder in der Nähe der besagten ersten Wärmequelle im besagten Zwischenabschnitt (21) befindet, und dadurch, dass die besagte Grenztemperatur (Tseuil) im Wesentlichen gleich ist, wie die zweite Solltemperatur (TC2).

8. System nach Anspruch 7, **dadurch gekennzeichnet, dass** sich der besagte zweite Flüssigkeitseingang (84) im besagten Zwischenabschnitt (21) des Tanks befindet.

9. System nach einem der vorhergehenden Ansprüche, **dadurch gekennzeichnet, dass** der Tank (2) darüber hinaus zumindest einen vierten Flüssigkeitseingang (81, 82, 83) umfasst, der sich oberhalb des besagten ersten Flüssigkeitseingangs (80) befindet, wobei der besagte erste Flüssigkeitskreislauf (5) zwischen dem besagten ersten Flüssigkeitsausgang (70) und dem besagten ersten und zumindest vierten Flüssigkeitseingang (81, 82, 83) des Tanks angeschlossen ist,
und dadurch, dass es darüber hinaus ein drittes Magnetventil (50) umfasst, das am besagten ersten Flüssigkeitskreislauf (5) montiert ist, um den besagten ersten Flüssigkeitsausgang (70) mit dem besagten ersten Flüssigkeitseingang (80) in eine fluide Verbindung zu bringen, und zumindest ein viertes Magnetventil (51, 52, 53), das am besagten ersten Flüssigkeitskreislauf (5) montiert ist, um den besagten ersten Flüssigkeitsausgang (70) mit dem besagten zumindest einen vierten Flüssigkeitseingang (81, 82, 83) in eine fluide Verbindung zu bringen, wobei der besagte Steuerungskreis (9) das besagte dritte Magnetventil (50) und das besagte zumindest eine vierte Magnetventil (51, 52, 53) in Abhängigkeit von der Temperatur (T5) der Flüssigkeit nach dem Durchlauf im besagten ersten Flüssigkeitskreislauf und der Temperatur der Flüssigkeit (T0, T1, T2, T3) im Inneren des Tanks im Bereich des besagten ersten und zumindest einen vierten Flüssigkeitseingangs ansteuert.

## Claims

1. Heating system (1) of a liquid comprising:
- a vessel (2) for receiving the liquid to be heated, said vessel comprising an upper portion (20), a lower portion (22) and an intermediate portion (21) between said lower and upper portions, with the liquid to be heated being present in said upper, lower and intermediate portions in fluidic communication,
- a heat generating source (3) with a compact immersed tube for heating the liquid in said vessel,
- a first fluid loop (5) in a closed circuit connected between a first liquid outlet (70) and a first liquid inlet (80) of the vessel and wherein circulates the fluid of the vessel, said first outlet of liquid (70) being arranged to take liquid in the upper portion (20) of the vessel and said first liquid inlet (80) being arranged to bring the liquid in said lower portion (22) or said intermediate portion (21) of the vessel,
- a recovery heat source (4) arranged outside the vessel and able to recover heat in the environment of the vessel and to heat the liquid of the vessel circulating in a second fluid loop (6) in a closed circuit connected between a second fluid outlet (71) of the vessel and second and third fluid inlets (84, 85) of the vessel, said second liquid outlet (71) being arranged to take liquid in the lower portion (22) of the vessel and said second and third fluid inlets (84, 85) of the vessel being arranged to bring liquid to first and second levels of elevation in the vessel respectively, said first level of elevation being located in the lower portion (22) or the intermediate portion (21) of the vessel and said second level of elevation being located in the upper portion (20) or the intermediate portion (21) of the vessel, said second level of elevation being located above the first level of elevation,
- a first solenoid valve (54) mounted on said second fluid loop (6) in order to place in fluidic communication said second liquid outlet (71) with said second liquid inlet (84) and a second solenoid valve (55) mounted on said second fluid loop (6) in order to place into fluidic communication said second liquid outlet (71) with said third liquid inlet (85), and
- a control circuit (9) for controlling said first and second solenoid valves (54,55) according to the heat recovered by said second heat source (4)
**characterised in that** said compact immersed tube (31) is fully arranged in the upper portion of the vessel.

2. System according to claim 1, **characterised in that** the second heat source (4) is a heat pump able to recover heat from the environment of the heating system.

3. System according to claim 1, **characterised in that** the second heat source (4) is a solar panel.

4. System as claimed in any preceding claim, **characterised in that** the control circuit (9) further controls the heat generating source (3) and the recovery heat source (4), said heat generating source (3) producing heat when the temperature of the liquid (T4) in said upper portion (20) of the vessel is less than a first setpoint temperature (TC1) and said recovery heat source (3) recovering heat when the temperature of the fluid in said upper portion (20) of the vessel is less than a second setpoint temperature (TC2), said second setpoint temperature (TC2) is higher than said first setpoint temperature (TC1).

5. System as claimed in any preceding claim, **characterised in that** the control circuit (9) controls said first and second solenoid valves (54, 55) according to the temperature of the liquid (T6) at the outlet of said recovery heat source (4), called the output temperature.

6. System according to claim 5, **characterised in that** the control circuit (9) opens said first solenoid valve (54) and closes said second solenoid valve (55) if said output temperature (T6) is less than a threshold temperature (Tseuil) and **in that** it closes said first solenoid valve (54) and opens said second solenoid valve (55) otherwise.

7. System according to claim 6, **characterised in that** said third fluid inlet (85) is located in said upper portion (20) or in the vicinity of said first source of heat in said intermediate portion (21) and **in that** said threshold temperature (Tseuil) is substantially equal to the second setpoint temperature (TC2).

8. System according to claim 7, **characterised in that** said second fluid inlet (84) is located in said intermediate portion (21) of the vessel.

9. System as claimed in any preceding claim, **characterised in that** the vessel (2) further comprises at least one fourth fluid inlet (81, 82, 83) located above said first fluid inlet (80), said first fluid loop (5) being connected between said first outlet of liquid (70) and said first and at least one fourth liquid inlets (81, 82, 83) of the vessel,
and **in that** it further comprises a third solenoid valve (50) mounted on said first fluid loop (5) in order to place in fluidic communication said first outlet of liquid (70) with said first fluid inlet (80) and at least one fourth solenoid valve (51, 52, 53) mounted on said first fluid loop (5) in order to place in fluidic communication said first outlet of liquid (70) with said at least one fourth fluid inlet (81, 82, 83), said control circuit (9) controlling said third solenoid valve (50) and said at least one fourth solenoid valve (51, 52, 53) according to the temperature (T5) of the liquid after passing in said first fluid loop and to the temperature of the liquid (TO, T1, T2, T3) inside the vessel on said first and at least one fourth fluid inlets.
